# EUROPEAN PATENT SPECIFICATION

(11) **EP 3 353 109 B1**
(45) Date of publication and mention of the grant of the patent: **07.08.2019**
(21) Application number: 16781298.1
(22) Date of filing: 21.09.2016
(51) Int. Cl.: B66C 23/44, B66C 23/36

(54) **SYSTEM FOR QUICK COUPLING AND UNCOUPLING OF A TRACKED UNIT WITH RESPECT TO A CHASSIS OF A TRACKED MACHINE, PARTICULARLY A TRACKED PIPE LAYING MACHINE**
SYSTEM ZUM SCHNELLEN AN- UND ABKUPPELN EINER RAUPENEINHEIT IN BEZUG AUF EIN FAHRGESTELL EINER RAUPENMASCHINE, INSBESONDERE EINER RAUPENMASCHINE ZUM ROHRLEITUNGSVERLEGEN
SYSTÈME D'ACCOUPLEMENT ET DE DÉSACCOUPLEMENT RAPIDE D'UNE UNITÉ À CHENILLES PAR RAPPORT À UN CHÂSSIS D'UNE MACHINE À CHENILLES, EN PARTICULIER UNE MACHINE À POSER DES TUYAUX À CHENILLES

(30) Priority: 24.09.2015 IT UB20153881
(43) Date of publication of application: 01.08.2018
(73) Proprietor: Euro Pipeline Equipment S.p.A., 20121 Milano (IT)
(72) Inventor: PICCININI, Fernando, 29013 Carpaneto Piacentino (IT)
(74) Representative: Modiano, Micaela Nadia
(86) International application number: PCT/EP2016/072459
(87) International publication number: WO 2017/050843

(56) References cited:
- DE-A1-102011 102 110
- US-A- 2 413 529
- US-A- 3 329 283
- US-A- 4 666 049
- US-A- 5 108 252
- US-A1- 2003 015 488
- US-A1- 2009 084 748
- US-A1- 2009 297 275
- US-A1- 2010 213 155
- Volvo: "VOLVO PIPELAYERS PL4608, PL4611", , 1 February 2011 (2011-02-01), XP055278171, Retrieved from the Internet: URL:http://www.volvoce.com/SiteCollectionD ocuments/VCE/Documents Global/Pipelayers/ProductBrochure_PL4608_P L4611_EN_30A1006739_2011_02.pdf [retrieved on 2016-06-06]
- Volvo Construction Equipment: "Volvo pipelayers - The future of the pipe laying business", , 26 November 2010 (2010-11-26), page 1, XP054976576, Retrieved from the Internet: URL:https://www.youtube.com/watch?v=5x9NIO offFE [retrieved on 2016-06-07]
- BestVolvoFanClub: "Volvo PL4608 & PL4611 Pipelayers in Action", , 26 March 2013 (2013-03-26), page 1, XP054976583, Retrieved from the Internet: URL:https://www.youtube.com/watch?v=gsKSuh mbT6Q [retrieved on 2016-06-09]

## Description

The present invention relates to a system for quick coupling and uncoupling of a tracked unit with respect to a chassis of a tracked machine, particularly a tracked pipe laying machine, such as known from the brochure VOLVO PIPELAYERS PL4608, PL4611.

In the field of tracked machines, such as for example earth-moving machines or other special machines such as pipe laying machines, the difficulties, costs and time involved in transporting these machines in building sites, due to their space occupation, are known.

In particular, in a tracked machine, the truck is the element that has the largest space occupation, since it must have dimensions, in particular in terms of width, such as to ensure the stability of the machine during all operations at the building site. Tracked assemblies, or tracked units, in fact protrude generally to the sides of the central body of the machine and lead to widths of the machine that are incompatible with transport on roads or railroads and require special measures even for transport on ships.

Accordingly, in order to be able to be transported, for example in a building site or in a maintenance workshop, tracked machines need to be at least partially disassembled and subsequently reassembled in place by means of very laborious operations.

The aim of the present invention is to provide a system for quick coupling and uncoupling of a tracked unit with respect to a chassis of a tracked machine that simplifies and accelerates the disassembly and reassembly operations.

Within this aim, an object of the present invention is to provide a quick coupling and uncoupling system that allows easy removal and equally easy reinstallation of the tracked units of a tracked machine.

A further object of the invention is to provide a quick coupling and uncoupling system that can be installed also on existing tracked machines.

Another object of the invention is to provide a quick coupling and uncoupling system that is capable of giving the greatest assurances of reliability and safety in use.

Another object of the invention is to provide a quick coupling and uncoupling system that is easy to provide and economically competitive if compared with the background art.

This aim, as well as these and other objects that will become better apparent hereinafter, are achieved by a system according to claim 1.

This aim, as well as these and other objects that will become better apparent hereinafter, are further achieved by a tracked machine, particularly of the pipe laying type, comprising a quick coupling and uncoupling system as defined above.

Further characteristics and advantages of the present invention will become better apparent from the description of a preferred but not exclusive embodiment of a system for quick coupling and uncoupling of a tracked unit with respect to a chassis of a tracked machine, illustrated by way of nonlimiting example with the aid of the accompanying drawings, wherein:

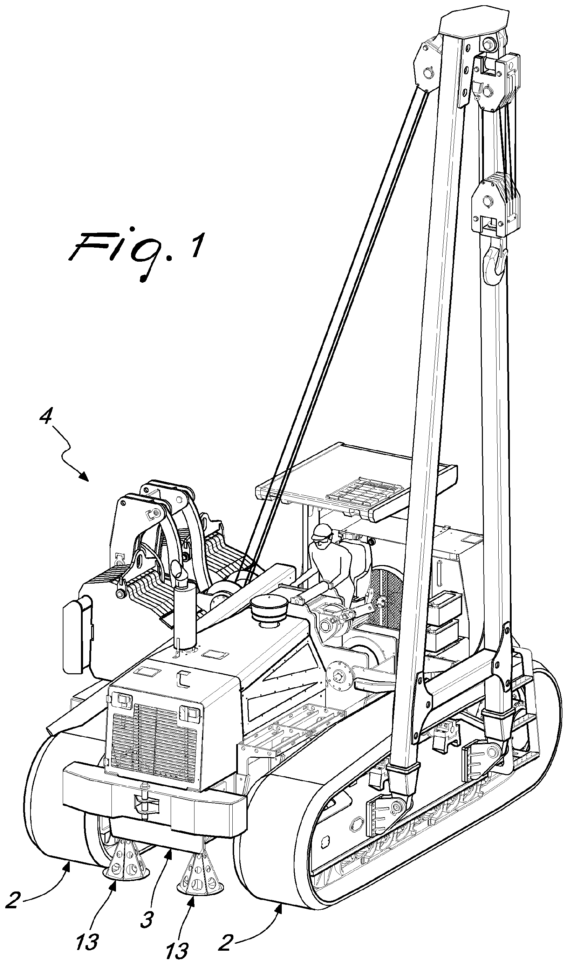

Figure 1 is a perspective view of a tracked pipe laying machine comprising a quick coupling and uncoupling system according to the invention;

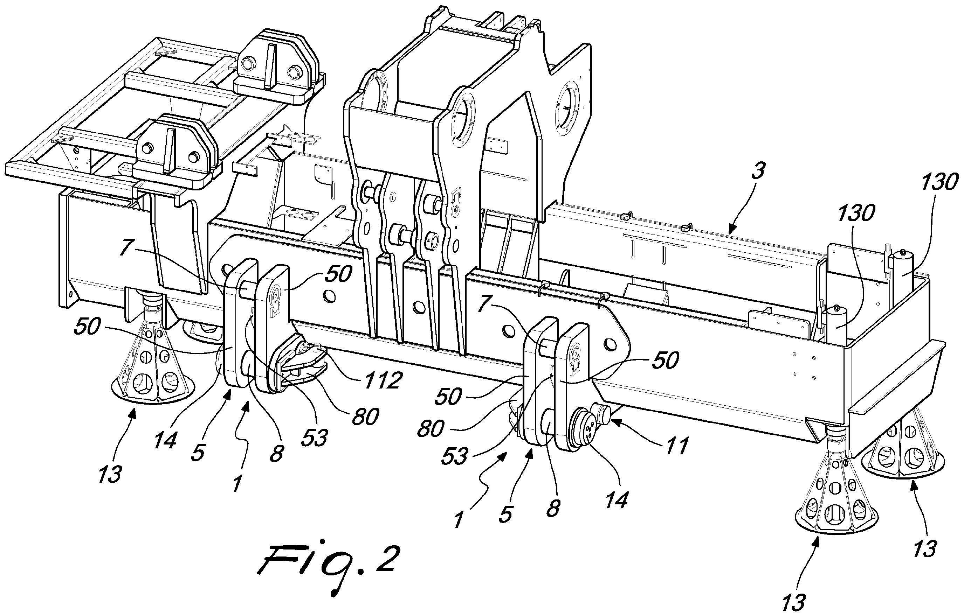

Figure 2 is a perspective view of a chassis of a tracked pipe laying machine, comprising the quick coupling and uncoupling system according to the invention;
Figure 3A is an enlarged-scale view of Figure 3, showing a part of the quick coupling and uncoupling system according to the invention in a first operating configuration;
Figure 3B is an enlarged-scale view of Figure 3, showing a part of the quick coupling and uncoupling system according to the invention in a second operating configuration;

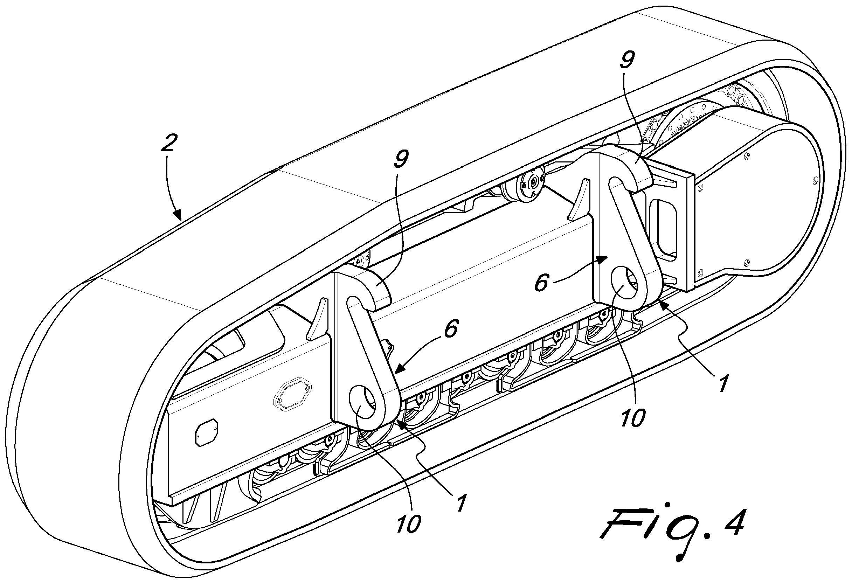

Figure 4 is a perspective view of a tracked unit of a tracked pipe laying machine, comprising the quick coupling and uncoupling system according to the invention;
Figure 5A is a transverse sectional view of the quick coupling and uncoupling system according to the invention in a first operating configuration;
Figure 5B is a transverse sectional view of the quick coupling and uncoupling system according to the invention in a second operating configuration.

With reference to the figures, a system for the quick coupling and uncoupling of a tracked unit with respect to a chassis of a tracked machine is designated generally by the reference numeral 1. The tracked unit, the chassis and the tracked machine as a whole are designated respectively by the reference numerals 2, 3 and 4.

According to the invention, the quick coupling and uncoupling system 1 comprises:
- at least two supporting structures 5, configured to be associated with a chassis 3 of a tracked machine 4, wherein each one of the two supporting structures 5 comprises at least one fixed pin 7 and at least one pin 8 that can move axially along its own longitudinal axis,
- at least two coupling devices 6, configured to be associated with a tracked unit 2, wherein each coupling device 6 comprises at least one hook 9 and at least one slot 10.

In a configuration for coupling the tracked unit 2 to the chassis 3, the hook 9 is mated with the fixed pin 7 and the movable pin 8 is inserted in the slot 10. The quick coupling and uncoupling system 1 further comprises an actuator 11 that is connected to the movable pin 8 in order to produce its axial movement. The actuator 11 is arranged laterally to the movable pin 8 and not coaxially.

Advantageously, the actuator 11 is arranged parallel to the longitudinal axis of the movable pin 8.

Advantageously, furthermore, the actuator 11 is at least partially accommodated in the supporting structure 5, preferably in a region of the supporting structure 5 proximate to the chassis 3 of the tracked machine 4.

This arrangement of the actuator 11 ensures its protection against any impacts, for example against the ground or against other components of the machine 4.

Advantageously, in fact, the actuator 11 can be embedded in the structural work of the supporting structure 5 itself.

The movable pin 8 advantageously comprises a connecting arm 80, while the actuator 11 advantageously comprises a slider 110 which can move axially, so that one end 111 of the movable slider 110 is pivoted to the connecting arm 80. In this manner the axial movement of the movable slider 110 is transmitted to the movable pin 8 by means of the connecting arm 80.

The movable slider 110 can comprise, at the end 111, a pivot 112, while the connecting arm 80 can comprise a hole 81 in which the pivot 112 is inserted, so that the pivot 112 and the hole 81 substantially form a hinge coupling.

Advantageously, the hole 81 is elongated in a direction of extension that is substantially perpendicular to the axial direction of motion of the movable pin 8, so as to allow the pivot 112 small movements in a direction at right angles to the axial direction.

This solution ensures the presence of a mechanical play capable of preventing, during the axial motion of the movable pin 8, controlled by the movable slider 110 by means of the connecting arm 80, the generation of unwanted transverse forces and moments due to less-than-perfect parallel arrangement between the direction of axial motion of the movable pin 8 and the direction of axial motion of the movable slider 110.

Advantageously, the supporting structure 5 comprises a pair of protruding lugs 50. The fixed pin 7 is fixed between the protruding lugs 50. The movable pin 8 can slide through a pair of slots 51 provided respectively in each of the two protruding lugs 50.

The coupling device 6 can be inserted advantageously in the pair of protruding lugs 50 of the supporting structure 5. Substantially, the protruding lugs 50 can act as a guide for the correct coupling of the coupling device 6.

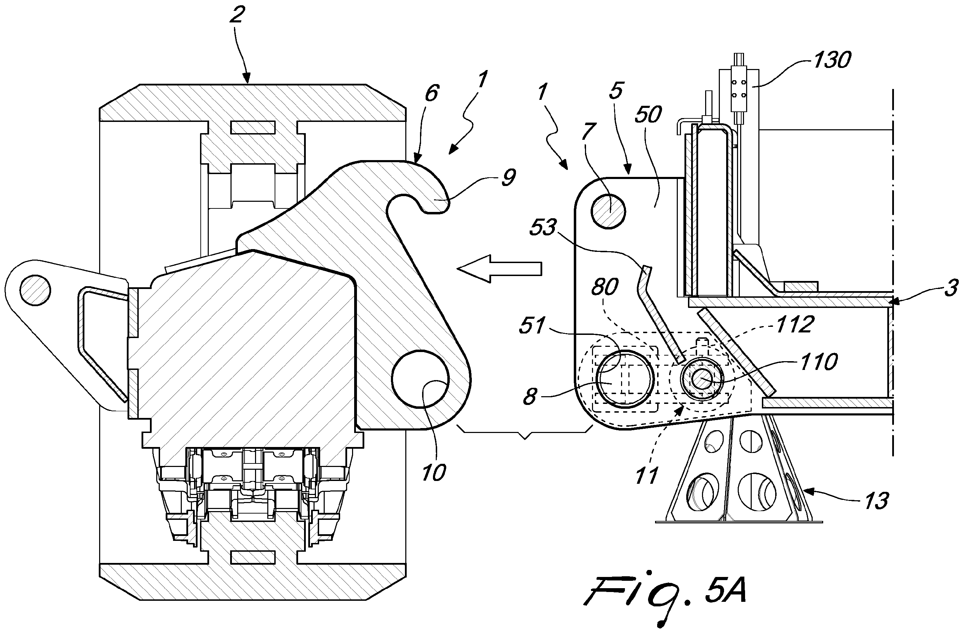

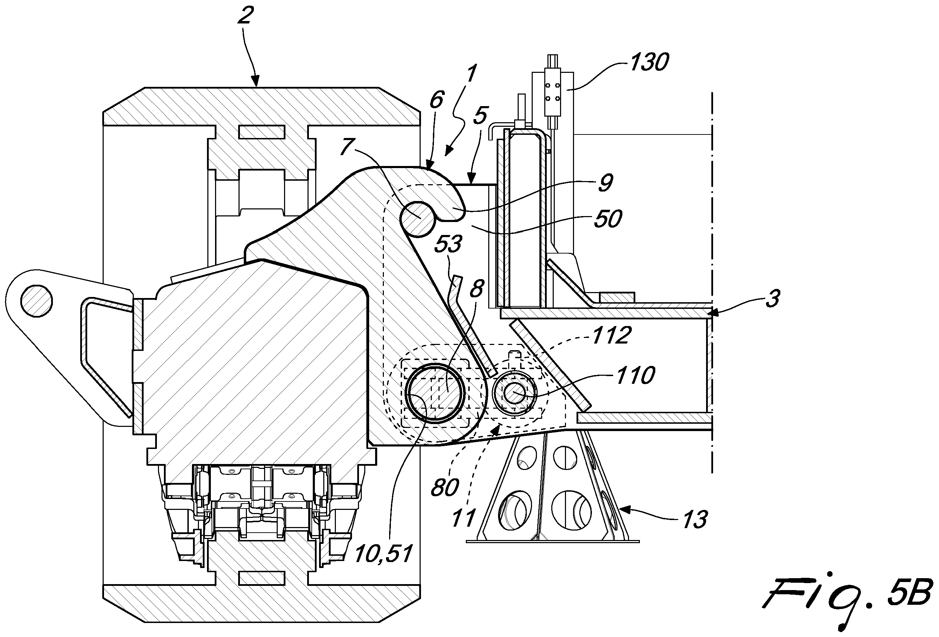

Advantageously, the supporting structure 5 comprises, between the two protruding lugs 50, an abutment plate 53. The coupling device 6 is adapted, once the hook 9 is in position on the fixed pin 7, due to the force of gravity, to abut against the abutment plate 53 so that the slot 10 of the coupling device 6 is aligned with the pair of slots 51 of the supporting structure 5, as shown in particular in Figure 5B.

In this manner, the movable pin 8 can pass through both the pair of slots 51 and the slot 10, fixing the coupling device 6 to the supporting structure 5 and thus fixing the tracked unit 2 to the chassis 3 of the tracked machine 4.

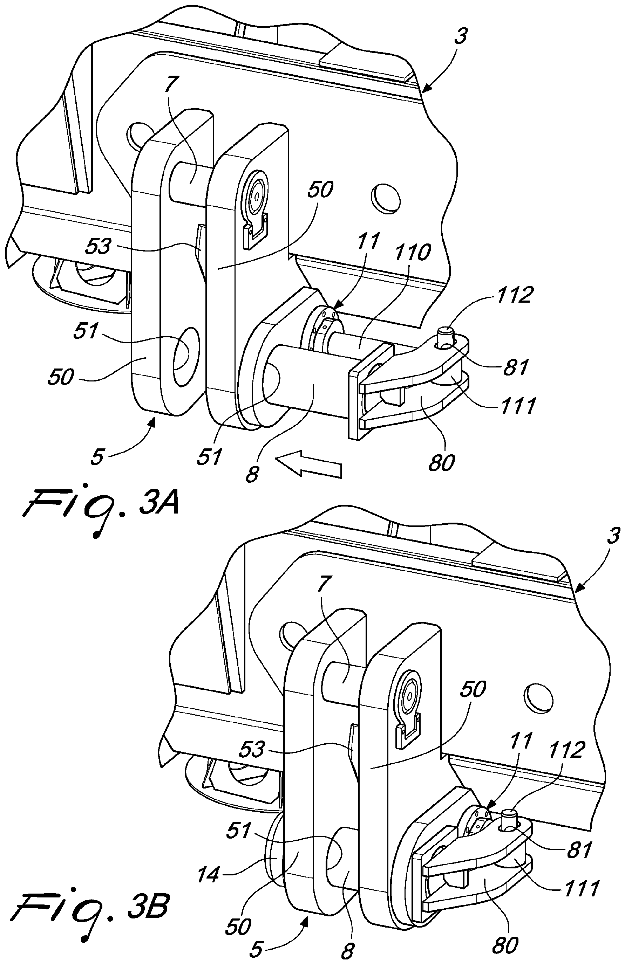

Figure 3A shows the extracted position of the movable pin 8, while Figure 3B shows the position of insertion of the movable pin 8; in this figure the coupling device 6 is not shown.

The actuators 11 can be actuated both by an operator onboard the machine and by an operator on the ground with a remote control.

In the configuration for coupling the tracked units 2 to the chassis 3, it is possible to associate advantageously with the movable pin 8, by means of an operator, a safety cap 14, which is adapted to prevent the accidental actuation of the actuator 11 from causing an unwanted uncoupling of the tracked units 2. The safety cap 14 in fact prevents, after removal by the operator, the extraction of the movable pin 8 from the slot 10 of the coupling device 6.

Advantageously, the safety cap 14 can be associated with the movable pin 8 by means of a plurality of fastening screws.

Advantageously, the quick coupling and uncoupling system 1 can also comprise a plurality of lifting feet 13 which are configured to be associated with the chassis 3 and are adapted to lift the tracked machine 4 with respect to the ground in order to take its weight off the tracked units 2 and allow their quick coupling or uncoupling.

The lifting feet 13 can each comprise a linear actuator 130.

The present invention also relates to a tracked machine 4, particularly of the pipe laying type, which comprises a pair of tracked units 2 and a chassis 3 and comprises a system 1 for the quick coupling and uncoupling of the tracked units 2 with respect to the chassis 3, as described above.

Operation of the quick coupling and uncoupling system is described briefly hereinafter.

The quick uncoupling of the tracked units 2 from the chassis 3 of the tracked machine 4 mainly provides for the following steps:
- extraction of the movable pin 8 from the slot 10 of the coupling device 6;
- lifting, for example by means of a crane, of the tracked unit 2 with respect to the chassis 3 of the tracked machine 4, so as to disengage the hook 9 from the fixed pin 7;
- removal of the tracked unit 2 from the chassis 3.

These steps are generally preceded by the following steps:
- activation of the lifting feet 13 in order to lift the tracked machine 4 off the ground;
- removal, by an operator, of the safety cap 14, so as to free the movable pin 8.

The coupling of a tracked unit 2 to the chassis 3 of a tracked machine 4 mainly provides for the following steps:
- lifting, for example by means of a crane, of the tracked unit 2 to such a height that the hook 9 is at a height from the ground that is greater than the height from the ground of the fixed pin 7;
- movement of the tracked unit 2 toward the chassis 3 and lowering of the tracked unit 2 so as to allow the engagement of the hook 9 with the fixed pin 7;
- due to gravity, and thanks to the presence of the abutment plate 53, the tracked unit 2 is arranged so that the slot 10 of the coupling device 6 is aligned with the movable pin 8, which is still in the extracted position;
- insertion of the movable pin 8 in the slot 10 of the coupling device 6.

These steps are generally preceded by the step of activation of the lifting feet 13 in order to lift the tracked machine 4 off the ground.

When the movable pin 8 is inserted in the slot 10, an operator can apply the safety cap 14.

In practice it has been found that the quick coupling and uncoupling system according to the present invention achieves the intended aim and objects, since it allows to remove simply and quickly tracked units from tracked machines.

Another advantage of the quick coupling and uncoupling system according to the invention resides in that it can be installed even on existing tracked machines by means of structural work that can be performed in workshops suitable for this purpose.

A further advantage of the quick coupling and uncoupling system according to the invention resides in that the actuator, which is the most delicate component of the system, is protected against impacts against the ground or against any components of the tracked machine due to its position.

Another advantage of the quick coupling and uncoupling system according to the invention resides in that it reduces the transport costs of tracked machines, since once the tracked units have been disassembled, the chassis of the machine, complete with the main components, can be easily containerized in a container.

The quick coupling and uncoupling system thus conceived is susceptible of numerous modifications and variations, all of which are within the scope of the appended claims.

Furthermore, all the details may be replaced with other technically equivalent elements.

In practice, the materials used, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system (1) for quick coupling and uncoupling of a tracked unit (2) with respect to a chassis (3) of a tracked machine (4), particularly a tracked pipe laying machine, comprising:
- at least two supporting structures (5), configured to be associated with a chassis (3) of a tracked machine (4), each one of said at least two supporting structures (5) comprising at least one fixed pin (7),
- at least two coupling devices (6), configured to be associated with a tracked unit (2), each one of said at least two coupling devices (6) comprising at least one hook (9) and at least one slot (10),
in a configuration for coupling said tracked unit (2) to said chassis (3), said hook (9) being mated with said fixed pin (7), **characterized in that** each one of said at least two supporting structures (5) comprises at least one pin (8) that can move axially along its own longitudinal axis, in said configuration for coupling said movable pin (8) being inserted in said slot (10), said quick coupling and uncoupling system (1) comprising an actuator (11) that is connected to said movable pin (8) in order to produce its axial movement, said actuator (11) being arranged laterally to said movable pin (8) and accommodated at least partially in said supporting structure (5).

2. The quick coupling and uncoupling system (1) according to claim 1, **characterized in that** said actuator (11) is arranged parallel to the longitudinal axis of said movable pin (8).

3. The quick coupling and uncoupling system (1) according to claim 1 or 2, **characterized in that** said actuator (11) is accommodated in a region of said supporting structure (5) proximate to said chassis (3) of said tracked machine (4).

4. The quick coupling and uncoupling system (1) according to one or more of the preceding claims, **characterized in that** said movable pin (8) comprises a connecting arm (80), said actuator (11) comprising a slider (110) that can move axially, one end (111) of said movable slider (110) being pivoted to said connecting arm (80), the axial movement of said movable slider (110) being transmitted to said movable pin (8) by means of said connecting arm (80).

5. The quick coupling and uncoupling system (1) according to claim 4, **characterized in that** said movable slider (110) comprises, at said end (111), a pivot (112), said connecting arm (80) comprising a hole (81) in which said pivot (112) is inserted.

6. The quick coupling and uncoupling system (1) according to claim 5, **characterized in that** said hole (81) is elongated in a direction of extension that is substantially perpendicular to the axial direction of motion of said movable pin (8).

7. The quick coupling and uncoupling system (1) according to one or more of the preceding claims, **characterized in that** said supporting structure (5) comprises a pair of protruding lugs (50), said fixed pin (7) being fixed between said protruding lugs (50), said movable pin (8) being able to slide through a pair of slots (51, 52) provided respectively in each one of said protruding lugs (50).

8. The quick coupling and uncoupling system (1) according to claim 7, **characterized in that** said coupling device (6) can be inserted within said pair of protruding lugs (50) of said supporting structure (5).

9. The quick coupling and uncoupling system (1) according to claim 7 or 8, **characterized in that** said supporting structure (5) comprises, between said pair of protruding lugs (50), an abutment plate (53), said coupling device (6) being adapted to abut against said abutment plate (53) so that said slot (10) of said engagement device (6) is aligned with said pair of slots (51, 52) of said supporting structure (5).

10. A tracked machine (4), particularly of the pipe laying type, comprising a pair of tracked units (2) and a chassis (3), **characterized in that** it comprises a system (1) for the quick coupling and uncoupling of said tracked units (2) with respect to said chassis (3) according to one or more of the preceding claims.

## Patentansprüche

1. Ein System (1) zum schnellen An- und Abkuppeln einer Raupeneinheit (2) in Bezug auf ein Fahrgestell (3) einer Raupenmaschine (4), insbesondere einer Raupenmaschine zum Rohrleitungsverlegen, das Folgendes umfasst:
- mindestens zwei tragende Strukturen (5), ausgebildet, um mit einem Fahrgestell (3) einer Raupenmaschine (4) verbunden zu werden, wobei jede der mindestens zwei tragenden Strukturen (5) mindestens einen festen Stift (7) umfasst,
- mindestens zwei Kupplungsvorrichtungen (6), ausgebildet, um mit einer Raupeneinheit (2) verbunden zu werden, wobei jede der mindestens zwei Kupplungsvorrichtungen (6) mindestens einen Haken (9) und mindestens eine Öffnung (10) umfasst,
wobei der Haken (9) in einer Konfiguration zum Ankuppeln der Raupeneinheit (2) an das Fahrgestell (3) mit dem festen Stift (7) in Verbindung steht; **dadurch gekennzeichnet, dass** jede der mindestens zwei tragenden Strukturen (5) mindestens einen Stift (8) umfasst, der sich axial entlang seiner eigenen Längsachse bewegen kann, wobei der bewegliche Stift (8) in der Konfiguration zum Ankoppeln in die Öffnung (10) eingesetzt ist; wobei das System (1) zum schnellen An- und Abkuppeln ein Betätigungselement (11) umfasst, das mit dem beweglichen Stift (8) verbunden ist, um seine axiale Bewegung auszulösen, wobei das Betätigungselement (11) seitlich zu dem beweglichen Stift (8) angeordnet und zumindest teilweise in der tragenden Struktur (5) untergebracht ist.

2. Das System (1) zum schnellen An- und Abkuppeln gemäß Anspruch 1, **dadurch gekennzeichnet, dass** das Betätigungselement (11) parallel zur Längsachse des beweglichen Stifts (8) angeordnet ist.

3. Das System (1) zum schnellen An- und Abkuppeln gemäß Anspruch 1 oder 2, **dadurch gekennzeichnet, dass** das Betätigungselement (11) in einem Bereich der tragenden Struktur (5) nahe dem Fahrgestell (3) der Raupenmaschine (4) untergebracht ist.

4. Das System (1) zum schnellen An- und Abkuppeln gemäß einem oder mehreren der obigen Ansprüche, **dadurch gekennzeichnet, dass** der bewegliche Stift (8) einen Verbindungsarm (80) umfasst, wobei das Betätigungselement (11) einen Schieber (110) umfasst, der sich axial bewegen kann; wobei ein Ende (111) des beweglichen Schiebers (110) drehgelenkig mit dem Verbindungsarm (80) verbunden ist; wobei die Axialbewegung des beweglichen Schiebers (110) über den Verbindungsarm (80) auf den beweglichen Stift (8) übertragen wird.

5. Das System (1) zum schnellen An- und Abkuppeln gemäß Anspruch 4, **dadurch gekennzeichnet, dass** der bewegliche Schieber (110) an dem Ende (111) einen Drehzapfen (112) umfasst, wobei der Verbindungsarm (80) ein Loch (81) umfasst, in welches der Drehzapfen (112) eingesetzt wird.

6. Das System (1) zum schnellen An- und Abkuppeln gemäß Anspruch 5, **dadurch gekennzeichnet, dass** das Loch (81) in eine Erstreckungsrichtung verlängert ist, die im Wesentlichen senkrecht zur axialen Bewegungsrichtung des beweglichen Stifts (8) ist.

7. Das System (1) zum schnellen An- und Abkuppeln gemäß einem oder mehreren der obigen Ansprüche, **dadurch gekennzeichnet, dass** die tragende Struktur (5) ein Paar vorstehender Nasen (50) umfasst, wobei der feste Stift (7) zwischen den vorstehenden Nasen (50) befestigt ist, wobei der bewegliche Stift (8) in der Lage ist, durch ein Paar von Öffnungen (51, 52) zu gleiten, die entsprechend in jeder der vorstehenden Nasen (50) angebracht sind.

8. Das System (1) zum schnellen An- und Abkuppeln gemäß Anspruch 7, **dadurch gekennzeichnet, dass** die Kupplungsvorrichtung (6) in das Paar vorstehender Nasen (50) der tragenden Struktur (5) eingesetzt werden kann.

9. Das System (1) zum schnellen An- und Abkuppeln gemäß Anspruch 7 oder 8, **dadurch gekennzeichnet, dass** die tragende Struktur (5) zwischen dem Paar vorstehender Nasen (50) eine Widerlagerplatte (53) umfasst, wobei die Kupplungsvorrichtung (6) ausgebildet ist, um an die Widerlagerplatte (53) anzustoßen, so dass die Öffnung (10) der Kupplungsvorrichtung (6) mit dem Paar von Öffnungen (51, 52) der tragenden Struktur (5) fluchtet.

10. Eine Raupenmaschine (4), insbesondere vom Typ zur Rohrleitungsverlegung, die ein Paar von Raupeneinheiten (2) und ein Fahrgestell (3) umfasst; **dadurch gekennzeichnet, dass** sie ein System (1) zum schnellen An- und Abkuppeln der Raupeneinheiten (2) in Bezug auf das Fahrgestell (3) gemäß einem oder mehreren der obigen Ansprüche umfasst.

## Revendications

1. Système (1) d'accouplement et de désaccouplement rapides d'une unité à chenilles (2) par rapport à un châssis (3) d'une machine à chenilles (4), en particulier d'une machine à poser des tuyaux montée sur chenilles, comportant :
- au moins deux structures de support (5), configurées pour être associées à un châssis (3) d'une machine à chenilles (4), chacune desdites au moins deux structures de support (5) comportant au moins un axe fixe (7),
- au moins deux dispositifs d'accouplement (6), configurés pour être associés à une unité à chenilles (2), chacun desdits au moins deux dispositifs d'accouplement (6) comportant au moins un crochet (9) et au moins une fente (10),
dans une configuration d'accouplement de ladite unité à chenilles (2) audit châssis (3), ledit crochet (9) étant apparié avec ledit axe fixe (7), **caractérisé en ce que** chacune desdites au moins deux structures de support (5) comporte au moins un axe (8) qui peut se déplacer axialement le long de son propre axe longitudinal, dans ladite configuration d'accouplement, ledit axe mobile (8) étant introduit dans ladite fente (10), ledit système d'accouplement et de désaccouplement rapides (1) comportant un actionneur (11) qui est relié audit axe mobile (8) afin de produire son mouvement axial, ledit actionneur (11) étant agencé latéralement audit axe mobile (8) et reçu au moins partiellement dans ladite structure de support (5).

2. Système (1) d'accouplement et de désaccouplement rapides selon la revendication 1, **caractérisé en ce que** ledit actionneur (11) est agencé parallèlement à l'axe longitudinal dudit axe mobile (8).

3. Système (1) d'accouplement et de désaccouplement rapides selon la revendication 1 ou 2, **caractérisé en ce que** ledit actionneur (11) est reçu dans une zone de ladite structure de support (5) à proximité dudit châssis (3) de ladite machine à chenilles (4).

4. Système (1) d'accouplement et de désaccouplement rapides selon une ou plusieurs des revendications précédentes, **caractérisé en ce que** ledit axe mobile (8) comporte un bras de liaison (80), ledit actionneur (11) comportant une coulisse (110) qui peut se déplacer axialement, une extrémité (111) de ladite coulisse mobile (110) pivotant sur ledit bras de liaison (80), le mouvement axial de ladite coulisse mobile (110) étant transmis audit axe mobile (8) au moyen dudit bras de liaison (80).

5. Système (1) d'accouplement et de désaccouplement rapides selon la revendication 4, **caractérisé en ce que** ladite coulisse mobile (110) comporte, sur ladite extrémité (111), un pivot (112), ledit bras de liaison (80) comportant un trou (81) dans lequel ledit pivot (112) est inséré.

6. Système (1) d'accouplement et de désaccouplement rapides selon la revendication 5, **caractérisé en ce que** ledit trou (81) est allongé dans une direction d'extension qui est sensiblement perpendiculaire à la direction axiale de mouvement dudit axe mobile (8).

7. Système (1) d'accouplement et de désaccouplement rapides selon une ou plusieurs des revendications précédentes, **caractérisé en ce que** ladite structure de support (5) comporte une paire de pattes en saillie (50), ledit axe fixe (7) étant fixé entre lesdites pattes en saillie (50), ledit axe mobile (8) pouvant coulisser à travers une paire de fentes (51, 52) agencées respectivement dans chacune desdites pattes en saillie (50).

8. Système (1) d'accouplement et de désaccouplement rapides selon la revendication 7, **caractérisé en ce que** ledit dispositif d'accouplement (16) peut être inséré à l'intérieur de ladite paire de pattes en saillie (50) de ladite structure de support (5).

9. Système (1) d'accouplement et de désaccouplement rapides selon la revendication 7 ou 8, **caractérisé en ce que** ladite structure de support (5) comporte, entre ladite paire de pattes en saillie (50), une plaque de butée (53), ledit dispositif d'accouplement (6) étant adapté pour venir en butée contre ladite plaque de butée (53) de sorte que ladite fente (10) dudit dispositif de prise (6) est alignée avec ladite paire de fentes (51, 52) de ladite structure de support (5).

10. Machine à chenilles (4), en particulier du type pour poser des tuyaux, comportant une paire d'unités à chenilles (2) et un châssis (3), **caractérisée en ce qu'**elle comporte un système (1) d'accouplement et de désaccouplement rapides desdites unités à chenilles (2) par rapport audit châssis (3) selon une ou plusieurs des revendications précédentes.
